# EUROPÄISCHE PATENTSCHRIFT

(11) **EP 3 183 694 B1**
(45) Veröffentlichungstag und Bekanntmachung des Hinweises auf die Patenterteilung: **16.10.2019**
(21) Anmeldenummer: 15775376.5
(22) Anmeldetag: 17.08.2015
(51) Int. Cl.: G06K 19/07, G06K 19/077

(54) **DATENTRÄGER MIT TEILSTÜCK**
DATA CARRIER COMPRISING A PARTIAL PIECE
SUPPORT DE DONNÉES POURVU D'UN ÉLÉMENT

(30) Priorität: 21.08.2014 DE 102014012394
(43) Veröffentlichungstag der Anmeldung: 28.06.2017
(73) Patentinhaber: Giesecke+Devrient Mobile Security GmbH, 81677 München (DE)
(72) Erfinder: SEXL, Markus, 82065 Baierbrunn (DE)
(86) Internationale Anmeldenummer: PCT/EP2015/001696
(87) Internationale Veröffentlichungsnummer: WO 2016/026572

(56) Entgegenhaltungen:
- EP-A1- 2 608 116
- WO-A1-2013/098518
- DE-A1-102012 001 776

## Beschreibung

Die vorliegende Erfindung betrifft ein Verfahren zum Herstellen eines Datenträgers mit einem daraus herauslösbaren Teilstück, sowie einen solchen Datenträger, insbesondere eine Chipkarte, vorzugsweise eine sogenannte Kombi-SIM-Karte.

Es sind Chipkarten verschiedener Größen bekannt, insbesondere in Form von SIM-Karten für Mobilfunkendgeräte. Die verschiedenen Größen von SIM-Karten sind insbesondere als Mini-SIM ("2FF", Second Form Factor), Micro-SIM ("3FF", Third Form Factor) und Nano-SIM ("4FF", Fourth Form Factor) bekannt und werden zum Beispiel für unterschiedliche Typen von Mobiltelefonen verwendet. Ein Benutzer eines Mobiltelefons bekommt eine für sein Mobiltelefon passende SIM-Karte zumeist als Teilstück einer Chipkarte im Scheckkartenformat (ID-1) zum Herausbrechen. Um die Herstellung und die Handhabung zu vereinfachen, sind Kombi-SIM-Karten bekannt, bei welcher mehrere der genannten Formfaktoren in einem Kartenkörper zum Herausbrechen oder Herausdrücken vorgestanzt sind.

Die unterschiedlichen Formfaktoren können neben unterschiedlichen Längen- und Breitenabmessungen auch unterschiedliche Dicken aufweisen. Falls beispielsweise eine Nano-SIM in einer Kombi-SIM bereitgestellt werden soll, stellt sich das Problem, dass die Nano-SIM spezifikationsgemäß eine geringere Dicke aufweist als die anderen Formfaktoren. Die geringere Dicke kann durch Fräsen der Vorderseite der Chipkarte erreicht werden, da hier ohnehin eine Kavität zur Aufnahme eines Chipmoduls zu fräsen ist. Wird bei einer solchen Kombi-SIM jedoch nicht die Nano-SIM, sondern ein größerer Formfaktor benötigt, liegen die Kontaktflächen des Chipmoduls in einer Vertiefung auf der Kartenvorderseite. Das kann dazu führen, dass Kontakte des Mobiltelefons in der Vertiefung hängen bleiben. Wird zur Vermeidung einer Vertiefung auf der Vorderseite die Dicke des Kartenkörpers von der Rückseite her beispielsweise durch Fräsen reduziert, wird die bereits bedruckte Rückseite in diesem Bereich zerstört, oder der noch nicht bedruckte Kartenkörper kann in diesem Bereich nicht ordentlich bedruckt werden.

Aus der WO 2013/ 098518 A1 ist es bekannt, die Herstellung einer Karte mit zwei unterschiedlichen Dicken durch Fräsen der Rückseite der Karte zu realisieren. Ein Teilstück der Karte kann mittels umlaufender Einkerbungen aus dem Kartenkörper herausgelöst werden.

Die DE 102012 001776 A1 beschreibt einen Kartenkörper mit einer heraustrennbaren Minichipkarte. Zur Minimierung der Ausbrechkräfte ist ein umlaufender Spalt vorgesehen und die Minichipkarte wird über schmale Stege im Kartenkörper gehalten. Die Stege können zusätzlich auch mit Einkerbungen kombiniert werden.

Aufgabe der vorliegenden Erfindung ist es, einen Datenträger mit einem Teilstück reduzierter Dicke sowie ein Verfahren zu dessen Herstellung vorzuschlagen, wobei Handhabung und Herstellung des Datenträgers in Bezug auf die oben genannten Nachteile verbessert werden.

Diese Aufgabe wird durch ein Verfahren zum Herstellen eines Datenträgers sowie einen Datenträger mit den Merkmalen der unabhängigen Ansprüche gelöst. Vorteilhafte Ausgestaltungen und Weiterbildungen sind in den abhängigen Ansprüchen angegeben.

Bei einem Verfahren zum Herstellen eines Datenträgers, insbesondere einer Chipkarte, wird zunächst ein kartenförmiger Datenträgerkörper bereitgestellt, welcher eine erste Dicke sowie eine Vorderseite und eine Rückseite aufweist. Die erste Dicke wird in einem vorgegebenen Bereich auf der Vorderseite des Datenträgerkörpers auf eine zweite Dicke reduziert, was durch Abtragen von Material, beispielsweise durch Fräsen, der Vorderseite in dem vorgegebenen Bereich erfolgen kann. Die Rückseite und gegebenenfalls die Vorderseite des Datenträgerkörpers können entweder vor oder nach dem Reduzieren der Dicke bedruckt werden.

Zum Erzeugen eines ersten, herauslösbaren Teilstücks wird der Datenträgerkörper in dem vorgegebenen Bereich durchtrennt, so dass das erste Teilstück in einer durch das Durchtrennen entstandenen Durchgangsöffnung des Datenträgerkörpers eingepasst und in der Durchgangsöffnung verlagerbar ist. Das Durchtrennen des Datenträgerkörpers erfolgt innerhalb des vorgegebenen Bereichs, kann vorzugsweise jedoch exakt entlang der Ränder erfolgen, so dass der vorgegebene Bereich die gleichen Längen- und Breitenabmessungen aufweist wie das zu erzeugende erste Teilstück. Alternativ kann auch umgekehrt zuerst das Durchtrennen des Datenträgerkörpers und dann das Reduzieren der Dicke des Datenträgerkörpers erfolgen.

Das erste Teilstück wird anschließend innerhalb der Durchgangsöffnung in Richtung der Vorderseite des Datenträgerkörpers so verlagert, dass das erste Teilstück mit der Vorderseite des Datenträgerkörpers fluchtet. Da das erste Teilstück derart in der Durchgangsöffnung des Datenträgerkörpers angeordnet ist, dass es mit der Vorderseite des Datenträgerkörpers fluchtet, weist der entstehende Datenträger eine ebene Vorderseite und eine Vertiefung im Bereich des ersten Teilstücks auf der Rückseite auf. Die ebene Vorderseite ist im Vergleich zu einer Vertiefung auf der Vorderseite vorteilhaft, da Kontakte eines Mobilfunkendgeräts über die Vorderseite des Datenträgers, auf der sich vorzugsweise Kontaktflächen eines Chipmoduls befinden, gleiten können, ohne dass die Gefahr besteht, dass sie in einer Vertiefung hängen bleiben. Da die Dicke des Datenträgers in dem vorgegebenen Bereich jedoch nicht von der Rückseite her reduziert wird, sondern von der Vorderseite mit anschließendem Verlagern des ersten Teilstücks in Richtung der Vorderseite, wird die Bedruckung der Rückseite nicht zerstört.

Vorzugsweise umfasst das Verfahren den Schritt des Bedruckens zumindest der Rückseite und/oder der Vorderseite des Datenträgerkörpers zeitlich vor dem Reduzieren der Dicke des Datenträgerkörpers in dem vorgegebenen Bereich. Wie erwähnt wird die Bedruckung auf der Rückseite nicht zerstört, da das Reduzieren der Dicke von der Vorderseite her erfolgt. Ein Zerstören der Bedruckung in dem vorgegebenen Bereich auf der Vorderseite ist jedoch nicht störend, da an dieser Stelle vorteilhaft ohnehin ein Chipmodul in den Datenträgerkörper implantiert wird, welches die Fläche des ersten Teilstücks vollständig bedecken kann oder, falls die Kontaktflächen kleiner als die Fläche des ersten Teilstücks sind, dann lediglich ein kleiner Rand um die Kontaktflächen des Chipmoduls ohne Bedruckung ist.

Vorzugsweise erfolgt das Durchtrennen des Datenträgerkörpers zum Erzeugen des ersten Teilstücks von der Vorderseite des Datenträgerkörpers aus. Dies geschieht vorzugsweise mittels eines speziellen Stanzwerkzeugs und eines Stempels, die eingerichtet ist, das erzeugte Teilstück beim Zurückziehen des Stanzmessers in der gestanzten Durchgangsöffnung zu halten und in Richtung der Vorderseite des Datenträgerkörpers zu schieben. Somit kann das erste Teilstück in einem Schritt erzeugt und verlagert werden.

Vorzugsweise umfasst der Datenträger ein Chipmodul, welches in dem ersten Teilstück eingesetzt ist. Demnach umfasst das Herstellungsverfahren vorzugsweise des Weiteren die Schritte des Erzeugens einer Kavität für ein Chipmodul auf der Vorderseite des Datenträgerkörpers in dem vorgegebenen Bereich und des Einsetzens eines Chipmoduls in die Kavität. Vorzugsweise erfolgt dies vor dem Verlagern des ersten Teilstücks in Richtung der Vorderseite des Datenträgerkörpers. Mit anderen Worten wird das erste Teilstück mitsamt dem implantierten Chipmodul in der Durchgangsöffnung des Datenträgerkörpers verlagert, wodurch insbesondere erreicht wird, dass die Kontaktflächen des Chipmoduls mit der Vorderseite des Datenträgers fluchten. Die Kontaktflächen können die Oberfläche des ersten Teilstücks vollständig einnehmen oder nur einen Teil bedecken.

In einem bevorzugten Ausführungsbeispiel wird die ursprüngliche, erste Dicke des Datenträgerkörpers in dem vorgegebenen Bereich um einen Anteil von höchstens 30%, vorzugsweise zwischen 15% und 25% reduziert. Mit anderen Worten beträgt die zweite Dicke zumindest 70%, vorzugsweise zwischen 75% und 85% der ersten Dicke.

Vorzugsweise werden zusätzlich zu dem ersten Teilstück noch ein zweites und/oder ein drittes, aus dem Datenträgerkörper herauslösbares Teilstück erzeugt, wobei vorteilhaft das zweite Teilstück das erste Teilstück umschließt und das dritte Teilstück das erste und gegebenenfalls zweite Teilstück umschließt. Vorzugsweise weist das zweite Teilstück eine Länge von 15,0 mm, eine Breite von 12,0 mm und eine Dicke von 0, 80 mm auf, während das dritte Teilstück vorzugsweise eine Länge von 25,0 mm, eine Breite von 15,0 mm und eine Dicke von 0,80 mm aufweist. Das erste Teilstück weist vorzugsweise eine Länge von 12,30 mm, eine Breite von 8,80 mm und eine Dicke von 0,67 mm und der Datenträgerkörper eine Länge von 85,60 mm, eine Breite von 53,98 mm und eine Dicke von 0,80 mm auf. Alle Abmessungen verstehen sich inklusive einer Toleranz von +/- 0,1 mm.

Vorzugsweise sind somit standardkonforme Formfaktoren vorgesehen, wobei es sich bei dem Datenträger vorzugsweise um eine Chipkarte im ID-1 Format gemäß ISO/IEC 7810:2003 und bei dem ersten Teilstück um eine Nano-SIM (4FF) gemäß ETSI TS 102 221 V11.0.0 handelt. Bei dem zweiten Teilstück handelt es sich vorzugsweise um eine Micro-SIM (Mini-UICC; 3FF) gemäß ETSI TS 102 221 V9.0.0 und bei dem dritten Teilstück um eine Mini-SIM (UICC; ID-000; 2FF) gemäß ISO/IEC 7810:2003. Vorzugsweise weist der Datenträger alle vier Formfaktoren auf. Auf das zweite und/oder dritte Teilstück kann jedoch auch verzichtet werden. In einer anderen zweckmäßigen Variante hat der Datenträger an sich die Gestalt eines dritten Teilstücks und enthält ein zweites und/oder ein erstes Teilstück; das den größten Formfaktor bildende Teilstück fehlt hier.

Das Durchtrennen des Datenträgerkörpers zum Erzeugen des ersten Teilstücks und gegebenenfalls das Erzeugen des zweiten und/oder dritten, aus dem Datenträgerkörper herauslösbaren Teilstücks erfolgt vorzugsweise durch Stanzen. Dabei können die Teilstücke passgenau ineinander eingepasst sein oder ein Spalt vorgesehen sein, wobei die Teilstücke dann über Stege miteinander verbunden sind. Bevorzugt werden kleinere Formfaktoren zuerst gestanzt, mit anderen Worten es wird von innen nach außen gestanzt, da dies das Handling und das Einhalten von Toleranzen erleichtert.

Die Erfindung wird im Folgenden beispielhaft anhand der begleitenden schematischen Zeichnungen beschrieben. Darin zeigen:
Fig. 1 einen Datenträger in Form einer Chipkarte in Draufsicht,
Fig. 2 einen Schnitt durch den Datenträger aus Fig. 1,
Fig. 3 eine Draufsicht auf den Datenträger aus Fig. 1 ohne das Chipmodul und
Fig. 4a bis 4f ausgewählte Verfahrensschritte zum Herstellen des Datenträgers aus Fig. 1 in schematischer Schnittdarstellung.

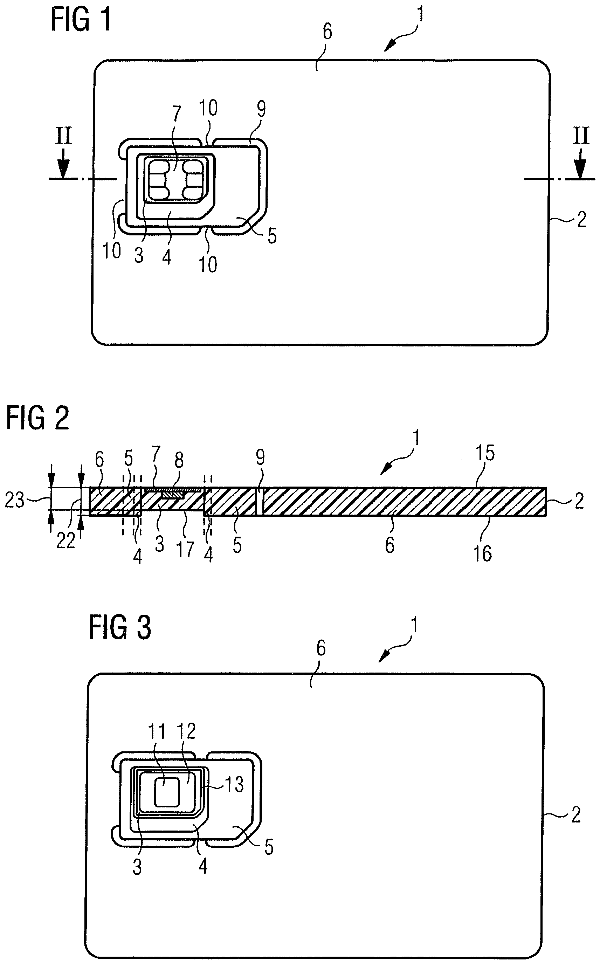

In Fig. 1 ist ein Datenträger 1 in Form einer Chipkarte dargestellt, deren Körper 2 mehrere Teilstücke 3, 4, 5, 6 umfasst. Der Datenträgerkörper 2 besteht vorzugsweise aus spritzgegossenem ABS (Acrylnitril-Butadien-Styrol), kann jedoch auch auf andere Weise und/oder anderen Materialien hergestellt sein, beispielsweise durch Laminieren mehrerer Schichten. In dem vorliegenden Ausführungsbeispiel handelt es sich um eine Kombi-SIM-Karte, bei der die Teilstücke 3, 4, 5, 6 standardisierte Formfaktoren bilden. Bei dem Datenträger 1 handelt es sich um eine Full-size SIM-Karte 6 im ID-1 Format gemäß ISO/IEC 7810:2003. Das erste Teilstück 3 ist in dem Ausführungsbeispiel eine Nano-SIM (4FF) gemäß ETSI TS 102 221 V11.0.0. Bei dem zweiten Teilstück 4 handelt es sich um eine Micro-SIM (Mini-UICC; 3FF) gemäß ETSI TS 102 221 V9.0.0 und bei dem dritten Teilstück 5 um eine Mini-SIM (UICC; ID-000; 2FF) gemäß ISO/IEC 7810:2003.

Das dritte Teilstück 5 kann aus dem Kartenkörper 2 herausgenommen werden und ist dazu über Stege 10 mit Sollbruchstellen mit diesem verbunden, wobei zwischen dem dritten Teilstück 5 und dem restlichen Kartenkörper 2 ein Spalt 9 vorgesehen ist, welcher mittels eines entsprechenden Stanzwerkzeugs erzeugt wird. Die Nano-SIM 3, die Micro-SIM 4 und die Mini-SIM 5 sind jeweils ineinander eingepasst. Mit anderen Worten umfasst der jeweils größere Formfaktor eine Durchgangsöffnung, in die der jeweils kleinere Formfaktor eingepasst ist. Ein Benutzer kann den für sein Endgerät passenden Formfaktor aus dem Kartenkörper 2 herauslösen. Vorteilhaft lässt sich ein herausgelöster kleinerer Formfaktor wieder in die entsprechende Durchgangsöffnung des nächstgrößeren Formfaktors einpassen, falls etwa versehentlich ein zu kleiner Formfaktor herausgelöst wurde. Vorteilhaft läßt sich insbesondere ein Teilstück 3 in ein Teilstück 4 wiedereinsetzen und ein Teilstück 4 in ein Teilstück 5.

Das erste Teilstück 3 in Form der Nano-SIM weist ein Chipmodul mit einem Chip 8 und Kontaktflächen 7 auf. Wie in der Schnittdarstellung in Fig. 2 zu erkennen ist, fluchtet die Oberfläche des ersten Teilstücks 3, insbesondere die Kontaktflächen 7 des Chipmoduls mit der Vorderseite 15 der Chipkarte 1.

Spezifikationsgemäß ist es jedoch zulässig, dass die Oberfläche des Chipmoduls um +/- 0,1 mm zu der Vorderseite der Chipkarte 1 versetzt ist. Dagegen ist auf der Rückseite 16 im Bereich des ersten Teilstücks 3 eine Vertiefung 17 zu finden, da das erste Teilstück 3 nach dem Stanzen in Richtung der Vorderseite 15 verlagert wurde, wie im Folgenden im Detail beschrieben wird. Das erste Teilstück 3 weist folglich eine gegenüber der Dicke 22 der anderen Formfaktoren reduzierte Dicke 23 auf. Die erste Dicke 22 beträgt 0,68 mm bis 0,84 mm, vorzugsweise 0,80 mm, während die zweite Dicke 23 geringer ist und 0,60 mm bis 0,70 mm, vorzugsweise 0,64 mm beträgt. In Fig. 2 sind die Grenzen der Teilstücke 3, 4, 5 durch gestrichelte Linien angedeutet.

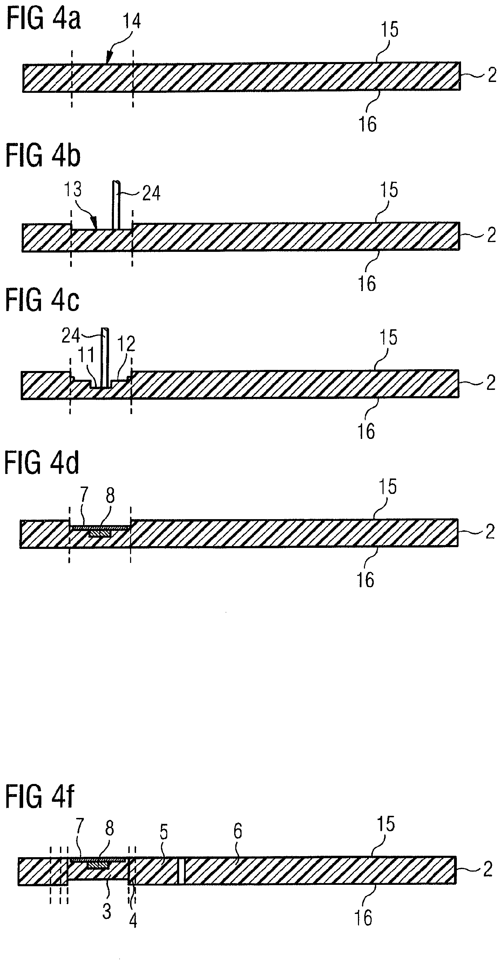

In Fig. 3 ist eine Draufsicht auf einen Kartenkörper 2 nach dem Reduzieren der Dicke dargestellt, wobei auch die zweistufige Kavität 11, 12 für das Chipmodul 7, 8 gezeigt ist, das Chipmodul 7, 8 selbst aber der Übersichtlichkeit halber weggelassen wurde. In der Praxis wird zweckmäßig das Chipmodul 7, 8 in die Kavität 11, 12 eingesetzt, bevor die Teilstücke 3, 4, 5angelegt werden. Die Kavität 12 weist in diesem Ausführungsbeispiel geringfügig kleinere Längen- und Breitenabmessungen als das erste Teilstück 3 auf, kann jedoch auch die gesamte Fläche des Teilstücks 3 einnehmen. Darüber hinaus ist eine Vertiefung 13 auf der Vorderseite zu erkennen, welche zum Reduzieren der Dicke 22 des Kartenkörpers 2 auf die gewünschte Dicke 23 des ersten Teilstücks 3 erzeugt wurde. Wie in Fig. 2 zu erkennen ist, kann die Vertiefung 13 geringfügig über die Abmessungen des ersten Teilstücks 3 hinausgehen. Vorzugsweise (wie in den Fig. 2 und 4a-4f angenommen) wird die Dicke 22 des Kartenkörpers 2 genau in dem Bereich reduziert, der den Abmessungen des ersten Teilstücks 3 entspricht, d.h. die Vertiefung 13 (und somit der vorgegebene Bereich 14, siehe Fig. 4a) und das erste Teilstück 3 sind deckungsgleich. Das Reduzieren der Dicke 22 des Kartenkörpers 2 sowie das Erzeugen der Kavität 11, 12 erfolgt vorzugsweise durch Fräsen des Kartenkörpers 2. Andere Verfahren zum Abtragen des Materials des Kartenkörpers 2 sind ebenso denkbar, wie beispielsweise Lasern.

In den Fig. 4a bis 4f sind Verfahrensschritte eines Verfahrens zum Herstellen einer Chipkarte 1 mit einem Teilstück 3, welches eine gegenüber dem restlichen Kartenkörper 2 reduzierte Dicke 23 aufweist, dargestellt. In Fig. 4a ist ein Rohling eines Kartenkörpers 2 mit einer Vorderseite 15 und einer Vorderseite 16 dargestellt. Die Vorderseite 15 und die Rückseite 16 sind bereits in einem vorangegangenen Schritt bedruckt worden. Es ist ein vorgegebener Bereich 14 angedeutet, in welchem die Dicke des Kartenkörpers 2 reduziert werden soll. Wie bereist erläutert, entsprechen die Abmessungen des vorgegebenen Bereichs 14 vorzugsweise denen des zu erzeugenden ersten Teilstücks 3.

Wie in Fig. 4b dargestellt ist, wird mittels eines Fräswerkzeugs 24 auf der Vorderseite 15 des vorzugsweise bereits beidseitig bedruckten Kartenkörpers 2 in dem vorgegebenen Bereich 14 eine Vertiefung 13 gefräst, um die Dicke 22 des Kartenkörpers 2 auf die gewünschte Dicke 23 des zu erzeugenden Teilstücks 3 zu reduzieren. Die Bedruckung wird in diesem Bereich auf der Vorderseite zerstört, was jedoch das Erscheinungsbild des Endprodukts nicht beeinträchtigt, da an dieser Stelle ein Chipmodul 7, 8 eingesetzt wird, dessen Kontaktflächen 7 die Vorderseite des Teilstücks 3 nahezu vollständig abdecken oder vollständig abdecken können. Dazu wird eine Kavität 11, 12 gefräst, welche beispielsweise zweistufig ausgebildet ist, um das Chipmodul mit den Kontaktflächen 7 und dem Chip 8 entsprechend aufzunehmen (Fig. 4c). Dieses wird nach bekannten Verfahren in die Kavität 11, 12, implantiert (Fig. 4d).

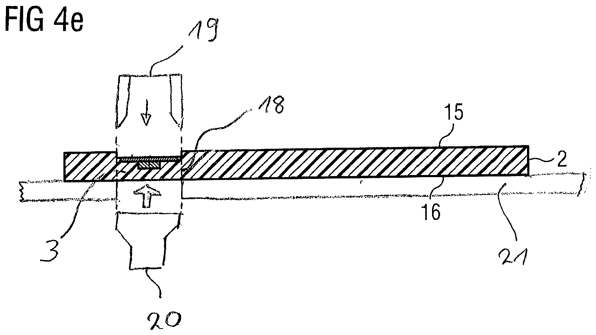

Fig. 4e zeigt den Schritt des Erzeugens des ersten Teilstücks 3 mithilfe eines Stanzwerkzeugs 19 und eines Stempels 20. Der Kartenkörper 2 liegt zweckmäßig auf einer Matrix 21 auf. Das Stanzen erfolgt mit dem Stanzwerkzeug 19 von der Vorderseite 15 des Kartenkörpers 2 aus. Das erzeugte Teilstück 3 wird dabei in der beim Stanzen entstehenden Durchgangsöffnung 18 in Richtung der Vorderseite 15 des Kartenkörpers verlagert. Dies geschieht mittels des Stempels 20. Beim Zurückfahren des Stanzwerkzeuges 19 wird mithilfe des Stempels 20 im gleichen Arbeitsschritt ferner das Teilstück 3 auf die Vorderseite 15 des Kartenkörpers 2 justiert. Das erste Teilstück 3 kann somit fluchtend zur Vorderseite 15 des Kartenkörpers 2 ausgerichtet werden, wobei gleichzeitig auf der Rückseite eine Vertiefung 17 entsteht. Insbesondere werden dann auch die Kontaktflächen 7 des Chipmoduls fluchtend zur Vorderseite 15 des Kartenkörpers 2 ausgerichtet.

In Fig. 4f ist schließlich analog zu Fig. 2 das Endprodukt dargestellt, wobei nach der Erzeugung des ersten Teilstücks 3 in entsprechender Weise nacheinander weitere Teilstücke 4, 5 erzeugt wurden. Die Teilstücke werden vorzugsweise von innen nach außen erzeugt, d.h. kleinere Teilstücke werden zuerst erzeugt. Auch ein gleichzeitiges Stanzen aller Teilstücke 3, 4, 5 ist möglich. Die Vorderseite der Chipkarte 1 ist eben, so dass Kontakte eines Endgeräts, wie eines Mobiltelefons, nicht in einer Vertiefung hängen bleiben können. Gleichzeitig bleibt die Bedruckung der Rückseite 16 im Bereich des ersten Teilstücks 3 intakt, da die Dicke 22 des Kartenkörpers 2 von der Vorderseite her reduziert wird, und wird nach dem Stanzvorgang zusammen mit dem ersten Teilstück 3 lediglich geringfügig in den Kartenkörper 2 hineingeschoben.

## Patentansprüche

1. Verfahren zum Herstellen eines Datenträgers (1), insbesondere einer Chipkarte, umfassend die Schritte:
- Bereitstellen eines kartenförmigen Datenträgerkörpers (2) mit einer ersten Dicke (22) sowie einer Vorderseite (15) und einer Rückseite (16),
- Reduzieren der ersten Dicke (22) des Datenträgerkörpers (2) auf eine zweite Dicke (23) in einem vorgegebenen Bereich (14) auf der Vorderseite (15) des Datenträgerkörpers (2) und
- Durchtrennen des Datenträgerkörpers (2) in dem vorgegebenen Bereich (14) zum Erzeugen eines ersten Teilstücks (3) des Datenträgerkörpers (2), so dass das erste Teilstück (3) in einer durch das Durchtrennen entstandenen Durchgangsöffnung (18) des Datenträgerkörpers (2) eingepasst und in der Durchgangsöffnung (18) verlagerbar ist,
**gekennzeichnet durch** den Schritt des Verlagerns des ersten Teilstücks (3) innerhalb der Durchgangsöffnung (18) in Richtung der Vorderseite (15) des Datenträgerkörpers (2), so dass das erste Teilstück (3) mit der Vorderseite (15) des Datenträgerkörpers (2) fluchtet.

2. Verfahren nach Anspruch 1, **gekennzeichnet durch** den Schritt des Bedruckens zumindest der Rückseite (16) des Datenträgerkörpers (2) vor dem Schritt des Reduzierens der ersten Dicke (22) des Datenträgerkörpers (2) in dem vorgegebenen Bereich (14).

3. Verfahren nach Anspruch 1 oder 2, **gekennzeichnet durch** den Schritt des Bedruckens der Vorderseite (15) des Datenträgerkörpers (2) vor dem Schritt des Reduzierens der ersten Dicke (22) des Datenträgerkörpers (2) in dem vorgegebenen Bereich (14).

4. Verfahren nach einem der Ansprüche 1 bis 3, **dadurch gekennzeichnet, dass** der Schritt des Durchtrennens des Datenträgerkörpers (2) zum Erzeugen des ersten Teilstücks (3) von der Rückseite (16) des Datenträgerkörpers (2) aus erfolgt, wobei die Vorderseite (15) des Datenträgerkörpers (2) an einer ebenen Fläche (21) anliegt und das erste Teilstück (3) zum Fluchten mit der Vorderseite (15) des Datenträgerkörpers (2) gegen die ebene Fläche (21) gedrückt wird.

5. Verfahren nach einem der Ansprüche 1 bis 4, **gekennzeichnet durch** den Schritt des Erzeugens einer Kavität (11, 12) für ein Chipmodul (7, 8) auf der Vorderseite (15) des Datenträgerkörpers (2) in dem vorgegebenen Bereich (14) und des Einsetzens eines Chipmoduls (7, 8) in die Kavität (11, 12), vorzugsweise vor dem Verlagern des ersten Teilstücks (3) in Richtung der Vorderseite (15) des Datenträgerkörpers (2).

6. Verfahren nach einem der Ansprüche 1 bis 5, **dadurch gekennzeichnet, dass** der Schritt des Reduzierens der ersten Dicke (22) des Datenträgerkörpers (2) in dem vorgegebenen Bereich (14) durch Fräsen der Vorderseite (15) des Datenträgerkörpers (2) erfolgt.

7. Verfahren nach einem der Ansprüche 1 bis 6, **dadurch gekennzeichnet, dass** die zweite Dicke (23) zumindest 70%, vorzugsweise zwischen 75% und 85% der ersten Dicke (22) beträgt.

8. Verfahren nach einem der Ansprüche 1 bis 7, **gekennzeichnet durch** den Schritt des Erzeugens zumindest eines zweiten, aus dem Datenträgerkörper (2) herauslösbaren Teilstücks (4), welches das erste Teilstück (3) umschließt, wobei das zweite Teilstück (4) vorzugsweise eine Länge von 15,00 mm, eine Breite von 12,0 mm und eine Dicke von 0,80 mm aufweist,
und/ oder eines dritten, aus dem Datenträgerkörper (2) herauslösbaren Teilstücks (5), welches das erste Teilstück (3) und gegebenenfalls das zweite Teilstück (4) umschließt, wobei das dritte Teilstück (5) vorzugsweise eine Länge von 25,0 mm, eine Breite von 15,0 mm und eine Dicke von 0,80 mm aufweist.

9. Verfahren nach einem der Ansprüche 1 bis 10, **dadurch gekennzeichnet, dass** das erste Teilstück (3) mit einer Länge von 12,30 mm, einer Breite von 8,8 mm und einer Dicke von 0,64 mm erzeugt wird und/oder der Datenträgerkörper (2) eine Länge von 85,6 mm, eine Breite von 53,98 mm und eine Dicke von 0,80 mm aufweist.

10. Verfahren nach einem der Ansprüche 1 bis 9, **dadurch gekennzeichnet, dass** der Schritt des Durchtrennens des Datenträgerkörpers (2) zum Erzeugen des ersten Teilstücks (3) und gegebenenfalls der Schritt des Erzeugens des zweiten und/oder dritten, aus dem Datenträgerkörper herauslösbaren Teilstücks (4, 5) durch Stanzen erfolgt.

11. Datenträger (1), insbesondere Chipkarte, umfassend einen kartenförmigen Datenträgerkörper (2) mit einer ersten Dicke (22) sowie einer Vorderseite (15) und einer Rückseite (16), wobei der Datenträger (1) zumindest ein Teilstück (3) aufweist, welches von dem Rest des Datenträgerkörpers (2) getrennt ist und in einer Durchgangsöffnung (18) des Datenträgerkörpers (2) eingepasst und in der Durchgangsöffnung (18) verlagerbar ist, wobei das erste Teilstück (3) eine gegenüber der ersten Dicke (22) reduzierte zweite Dicke (23) aufweist,
**dadurch gekennzeichnet, dass** das erste Teilstück (3) derart in der Durchgangsöffnung (18) des Datenträgerkörpers (2) angeordnet ist, dass es mit der Vorderseite (15) des Datenträgerkörpers (2) fluchtet.

12. Datenträger nach Anspruch 11, **dadurch gekennzeichnet, dass** der Datenträger (1) ein Chipmodul (7, 8) aufweist, welches in dem ersten Teilstück (3) eingesetzt ist.

13. Datenträger nach Anspruch 11 oder 12, **dadurch gekennzeichnet, dass** die zweite Dicke (23) zumindest 70%, vorzugsweise zwischen 73% und 85% der ersten Dicke (22) beträgt.

14. Datenträger nach einem der Ansprüche 11 bis 13, **dadurch gekennzeichnet, dass** der Datenträgerkörper (2) zumindest ein zweites, aus dem Datenträgerkörper herauslösbares Teilstück (4) aufweist, welches das erste Teilstück (3) umschließt, wobei das zweite Teilstück (4) vorzugsweise eine Länge von 15,0 mm, eine Breite von 12,0 mm und eine Dicke von 0,80 mm aufweist,
und/oder ein drittes, aus dem Datenträgerkörper (2) herauslösbares Teilstück (5) aufweist, welches das erste Teilstück (3) und gegebenenfalls das zweite Teilstück (4) umschließt, wobei das dritte Teilstück (5) vorzugsweise eine Länge von 25,0 mm, eine Breite von 15,0 mm und eine Dicke von 0,80 mm aufweist.

15. Datenträger nach einem der Ansprüche 11 bis 14, **dadurch gekennzeichnet, dass** das erste Teilstück (3) eine Länge von 12,30 mm, eine Breite von 8,8 mm und eine Dicke von 0,64 mm aufweist und/oder der Datenträgerkörper (2) eine Länge von 85,6 mm, eine Breite von 53,98 mm und eine Dicke von 0,80 mm aufweist.

## Claims

1. A method for manufacturing a data carrier (1), in particular a chip card, comprising the steps of:
- making available a card-shaped data carrier body (2) with a first thickness (22) and a front side (15) and a back side (16),
- reducing the first thickness (22) of the data carrier body (2) to a second thickness (23) in a predetermined region (14) on the front side (15) of the data carrier body (2) and
- cutting through the data carrier body (2) in the predetermined region (14) for producing a first partial piece (3) of the data carrier body (2), so that the first partial piece (3) is fitted into a through opening (18) of the data carrier body (2) created by the cutting through and is displaceable in the through opening (18),
**characterized by** the step of displacing the first partial piece (3) within the through opening (18) in the direction of the front side (15) of the data carrier body (2), so that the first partial piece (3) is flush with the front side (15) of the data carrier body (2).

2. The method according to claim 1, **characterized by** the step of printing at least the back side (16) of the data carrier body (2) before the step of reducing the first thickness (22) of the data carrier body (2) in the predetermined region (14).

3. The method according to claim 1 or 2, **characterized by** the step of printing of the front side (15) of the data carrier body (2) before the step of reducing the first thickness (22) of the data carrier body (2) in the predetermined region (14).

4. The method according to any of the claims 1 to 3, **characterized in that** the step of cutting through the data carrier body (2) for producing the first partial piece (3) is effected from the back side (16) of the data carrier body (2), wherein the front side (15) of the data carrier body (2) lies against a flat surface (21) and the first partial piece (3) is pushed against the flat surface (21) for flush alignment with the front side (15) of the data carrier body (2).

5. The method according to any of the claims 1 to 4, **characterized by** the step of producing a cavity (11, 12) for a chip module (7, 8) on the front side (15) of the data carrier body (2) in the predetermined region (14) and of inserting a chip module (7, 8) into the cavity (11, 12), preferably prior to displacing the first partial piece (3) in the direction of the front side (15) of the data carrier body (2).

6. The method according to any of the claims 1 to 5, **characterized in that** the step of reducing the first thickness (22) of the data carrier body (2) in the predetermined region (14) is effected by milling the front side (15) of the data carrier body (2).

7. The method according to any of the claims 1 to 6, **characterized in that** the second thickness (23) amounts to at least 70%, preferably between 75% and 85%, of the first thickness (22).

8. The method according to any of the claims 1 to 7, **characterized by** the step of producing at least one second partial piece (4) detachable from the data carrier body (2), said second partial piece enclosing the first partial piece (3), wherein the second partial piece (4) preferably has a length of 15.00 mm, a width of 12.0 mm and a thickness of 0.80 mm,
and/or a third partial piece (5) detachable from the data carrier body (2), said third partial piece enclosing the first partial piece (3) and, where applicable, the second partial piece (4), wherein the third partial piece (5) preferably has a length of 25.0 mm, a width of 15.0 mm and a thickness of 0.80 mm.

9. The method according to any of the claims 1 to 10, **characterized in that** the first partial piece (3) is produced having a length of 12.30 mm, a width of 8.8 mm and a thickness of 0.64 mm and/or the data carrier body (2) has a length of 85.6 mm, a width of 53.98 mm and a thickness of 0.80 mm.

10. The method according to any of the claims 1 to 9, **characterized in that** the step of cutting through the data carrier body (2) for producing the first partial piece (3) and, where applicable, the step of producing the second and/or third partial piece (4, 5) detachable from the data carrier body is effected by punching.

11. A data carrier (1), in particular a chip card, comprising a card-shaped data carrier body (2) with a first thickness (22) and a front side (15) and a back side (16), wherein the data carrier (1) has at least one partial piece (3) which is separated from the rest of the data carrier body (2) and is fitted into a through opening (18) of the data carrier body (2) and is displaceable in the through opening (18), wherein the first partial piece (3) has a second thickness (23) that is reduced in relation to the first thickness (22), **characterized in that** the first partial piece (3) is arranged in the through opening (18) of the data carrier body (2) such that it is flush with the front side (15) of the data carrier body (2).

12. The data carrier according to claim 11, **characterized in that** the data carrier (1) has a chip module (7, 8) which is inserted into the first partial piece (3).

13. The data carrier according to claim 11 or 12, **characterized in that** the second thickness (23) amounts to at least 70%, preferably between 73% and 85%, of the first thickness (22).

14. The data carrier according to any of the claims 11 to 13, **characterized in that** the data carrier body (2) has at least one second partial piece (4) detachable from the data carrier body, said second partial piece enclosing the first partial piece (3), wherein the second partial piece (4) preferably has a length of 15.0 mm, a width of 12.0 mm and a thickness of 0.80 mm,
and/or a third partial piece (5) detachable from the data carrier body (2), said third partial piece enclosing the first partial piece (3) and, where applicable, the second partial piece (4), wherein the third partial piece (5) preferably has a length of 25.0 mm, a width of 15.0 mm and a thickness of 0.80 mm.

15. The data carrier according to any of the claims 11 to 14, **characterized in that** the first partial piece (3) has a length of 12.30 mm, a width of 8.8 mm and a thickness of 0.64 mm and/or the data carrier body (2) has a length of 85.6 mm, a width of 53.98 mm and a thickness of 0.80 mm.

## Revendications

1. Procédé de fabrication d'un support de données (1), en particulier d'une carte à puce, comprenant les étapes :
- mise à disposition d'un corps de support de données (2) en forme de carte ayant une première épaisseur (22) ainsi qu'une face avant (15) et une face arrière (16),
- réduction de la première épaisseur (22) du corps de support de données (2) de manière à obtenir une deuxième épaisseur (23) dans une zone (14) prédéterminée sur la face avant (15) du corps de support de données (2), et
- sectionnement du corps de support de données (2) dans la zone (14) prédéterminée pour générer un premier fragment (3) du corps de support de données (2), de telle sorte que le premier fragment (3) est encastré dans une ouverture traversante (18) du corps de support de données (2) créée par le sectionnement et peut être déplacé dans l'ouverture traversante (18),
**caractérisé par** l'étape du déplacement du premier fragment (3) à l'intérieur de l'ouverture traversante (18) en direction de la face avant (15) du corps de support de données (2), de telle sorte que le premier fragment (3) est en alignement avec la face avant (15) du corps de support de données (2).

2. Procédé selon la revendication 1, **caractérisé par** l'étape de l'impression d'au moins la face arrière (16) du corps de support de données (2) avant l'étape de la réduction de la première épaisseur (22) du corps de support de données (2) dans la zone (14) prédéterminée.

3. Procédé selon la revendication 1 ou 2, **caractérisé par** l'étape de l'impression de la face avant (15) du corps de support de données (2) avant l'étape de la réduction de la première épaisseur (22) du corps de support de données (2) dans la zone (14) prédéterminée.

4. Procédé selon une des revendications de 1 à 3, **caractérisé en ce que** l'étape du sectionnement du corps de support de données (2) pour générer le premier fragment (3) a lieu depuis la face arrière (16) du corps de support de données (2), cependant que la face avant (15) du corps de support de données (2) est ajusté contre une surface plane (21) et que le premier fragment (3) est pressé contre la surface plane (21) afin d'être en coïncidence avec la face avant (15) du corps de support de données (2).

5. Procédé selon une des revendications de 1 à 4, **caractérisé par** l'étape de la génération d'une cavité (11, 12) pour un module puce (7, 8) sur la face avant (15) du corps de support de données (2) dans la zone (14) prédéterminée, et de l'insertion d'un module puce (7, 8) dans la cavité (11, 12), de préférence avant le déplacement du premier fragment (3) en direction de la face avant (15) du corps de support de données (2).

6. Procédé selon une des revendications de 1 à 5, **caractérisé en ce que** l'étape de la réduction de la première épaisseur (22) du corps de support de données (2) dans la zone (14) prédéterminée a lieu par fraisage de la face avant (15) du corps de support de données (2).

7. Procédé selon une des revendications de 1 à 6, **caractérisé en ce que** la deuxième épaisseur (23) est d'au moins 70 %, de préférence comprise entre 75 % et 85 % de la première épaisseur (22).

8. Procédé selon une des revendications de 1 à 7, **caractérisé par** l'étape de la génération d'au moins un deuxième fragment (4), détachable du corps de support de données (2), qui entoure le premier fragment (3), cependant que le deuxième fragment (4) a de préférence une longueur de 15,00 mm, une largeur de 12,0 mm et une épaisseur de 0,80 mm,
et/ou d'un troisième fragment (5), détachable du corps de support de données (2), qui entoure le premier fragment (3) et éventuellement le deuxième fragment (4), cependant que le troisième fragment (5) a de préférence une longueur de 25,00 mm, une largeur de 15,0 mm et une épaisseur de 0,80 mm.

9. Procédé selon une des revendications de 1 à 10, **caractérisé en ce que** le premier fragment (3) est généré en une longueur de 12,30 mm, en une largeur de 8,8 mm et une épaisseur de 0,64 mm, et/ou que le corps de support de données (2) a une longueur de 85,6 mm, une largeur de 53,98 mm et une épaisseur de 0,80 mm.

10. Procédé selon une des revendications de 1 à 9, **caractérisé en ce que** l'étape du sectionnement du corps de support de données (2) afin de générer le premier fragment (3) et éventuellement l'étape de la génération du deuxième et/ou du troisième fragment (4, 5), détachable du corps de support de données, a lieu par estampage.

11. Support de données (1), en particulier carte à puce, comprenant un corps de support de données (2) en forme de carte ayant une première épaisseur (22) ainsi qu'une face avant (15) et une face arrière (16), cependant que le support de données (1) comporte au moins un fragment (3) qui est séparé du reste du corps de support de données (2) et qui est encastré dans une ouverture traversante (18) du corps de support de données (2) et peut être déplacé dans l'ouverture traversante (18), cependant que le premier fragment (3) a une deuxième épaisseur (23) qui est réduite par rapport à la première épaisseur (22),
**caractérisé en ce que** le premier fragment (3) est agencé de telle manière dans l'ouverture traversante (18) du corps de support de données (2) qu'il est en alignement avec la face avant (15) du corps de support de données (2).

12. Support de données selon la revendication 11, **caractérisé en ce que** le support de données (1) comporte un module puce (7, 8) qui est inséré dans le premier fragment (3).

13. Support de données selon la revendication 11 ou 12, **caractérisé en ce que** la deuxième épaisseur (23) est d'au moins 70 %, de préférence comprise entre 73 % et 85 % de la première épaisseur (22).

14. Procédé selon une des revendications de 11 à 13, **caractérisé en ce que** le corps de support de données (2) comporte au moins un deuxième fragment (4), détachable du corps de support de données, qui entoure le premier fragment (3), cependant que le deuxième fragment (4) a de préférence une longueur de 15,0 mm, une largeur de 12,0 mm et une épaisseur de 0,80 mm,
et/ou comporte un troisième fragment (5), détachable du corps de support de données (2), qui entoure le premier fragment (3) et éventuellement le deuxième fragment (4), cependant que le troisième fragment (5) a de préférence une longueur de 25,00 mm, une largeur de 15,0 mm et une épaisseur de 0,80 mm.

15. Procédé selon une des revendications de 11 à 14, **caractérisé en ce que** le premier fragment (3) a une longueur de 12,30 mm, en une largeur de 8,8 mm et une épaisseur de 0,64 mm, et/ou que le corps de support de données (2) a une longueur de 85,6 mm, une largeur de 53,98 mm et une épaisseur de 0,80 mm.
